# EUROPÄISCHE PATENTANMELDUNG

(11) **EP 2 567 856 A1**
(43) Veröffentlichungstag der Anmeldung: **13.03.2013**
(21) Anmeldenummer: 11180201.3
(22) Anmeldetag: 06.09.2011
(51) Int. Cl.: B60L 11/18, H02J 7/00, H02J 7/02

(54) **Vorrichtung zur elektrischen Versorgung eines Elektrofahrzeugs, Verfahren zu deren Betrieb und Elektrofahrzeug mit einer solchen Vorrichtung**

(71) Anmelder: Siemens Aktiengesellschaft, 80333 München (DE)
(72) Erfinder: Peschkow, Wladislaw, 91056 Erlangen (DE); Nagengast, Peter, 90482 Nürnberg (DE); Schwesig, Günter, 91054 Erlangen (DE); Weiss, Jörg, 09224 Chemnitz (DE)

(57) **Zusammenfassung**

Die Erfindung betrifft eine Vorrichtung zur elektrischen Versorgung eines Elektrofahrzeugs, zum Anschluss an eine Hochvoltbatterie (38) und ein Versorgungsnetz (16), wobei die Vorrichtung eine Ladeschaltung (68) und eine Bordnetzversorgungsschaltung (70) und einen elektromagnetischen Übertrager (72) mit einer Primärwicklung (74) und einer ersten und zumindest einer zweiten Sekundärwicklung (76,78) umfasst, wobei ein erster und ein zweiter Teil (80,82) der Ladeschaltung (68) durch die Primärwicklung (74) und die erste Sekundärwicklung (76) verbunden sind und wobei die zweite Sekundärwicklung (78) zur Speisung der Bordnetzversorgungsschaltung (70) wirksam ist. Die Erfindung betrifft weiterhin ein Verfahren zum Betrieb der Vorrichtung und ein Elektrofahrzeug mit einer solchen Vorrichtung.

## Beschreibung

Die Erfindung betrifft eine Vorrichtung zur elektrischen Versorgung eines Elektrofahrzeugs oder eines Elektrohybridfahrzeugs, im Folgenden zusammen als Elektrofahrzeug bezeichnet. Sie bezieht sich weiter auf ein Verfahren zum Betrieb der Vorrichtung und ein solches Elektrofahrzeug mit einer solchen Vorrichtung.

Derartige Vorrichtungen umfassen im Allgemeinen einen Netzanschluss und eine Hochvoltbatterie oder sind an ein Versorgungsnetz und eine Hochvoltbatterie anschließbar. Die Vorrichtung, also eine entsprechende Schaltung, speist einen oder mehrere Wechselrichter und der oder die Wechselrichter speisen eine oder mehrere Drehfeldmaschinen zum Antrieb der Fahrzeugräder eines Elektrofahrzeugs. Zum Laden der Hochvoltbatterie ist im Elektrofahrzeug meist ein Ladegerät angeordnet. Das Ladegerät wird üblicherweise zum Laden über den Netzanschluss und eine elektrischen Leitung mit einem Stecker an das landesübliche Ein- oder Mehrphasennetz, z.B. Zweiphasennetz oder Dreiphasennetz, angeschlossen.

Für eine Bordnetzversorgung, z.B. mit 12 Volt, von Nebenaggregaten des Elektrofahrzeugs, wie eine Wasserpumpe für flüssigkeitsgekühlte Komponenten, ein Elektromotor und ein Wechselrichter, eine Heizung, ein Kompressor für eine Klimaanlage, ein oder mehrere Scheibenwischer, eine Lichtanlage usw., wird aus der Hochvoltbatterie über einen Tiefsetzsteller (auch DC/DC-Wandler genannt) die entsprechende Spannung erzeugt. Der Tiefsetzsteller kann auch Mittel zur Potenzialtrennung, z.B. einen Transformator, umfassen.

Somit sind zwei Geräte, nämlich ein Ladegerät und ein Bordnetzversorgungsgerät, erforderlich, die mit entsprechendem Aufwand verkabelt und gekapselt, d.h. in einem Gehäuse untergebracht, werden müssen.

Der Erfindung liegt daher die Aufgabe zugrunde, eine Vorrichtung der Eingangs genannten Art anzugeben, die besonders kostengünstig ist und zudem Gewicht und Bauvolumen spart.

Diese Aufgabe wird erfindungsgemäß mit den Merkmalen des Anspruchs 1 gelöst. Dazu ist bei einer Vorrichtung zur elektrischen Versorgung eines Elektrofahrzeugs, die einen Netzanschluss und eine Hochvoltbatterie umfasst oder an ein Versorgungsnetz und eine Hochvoltbatterie anschließbar ist sowie eine Ladeschaltung und eine Bordnetzversorgungsschaltung sowie einen elektromagnetischen Übertrager mit einer Primärwicklung und einer ersten und zumindest einer zweiten Sekundärwicklung umfasst, vorgesehen dass ein erster und ein zweiter Teil der Ladeschaltung durch die Primärwicklung und die erste Sekundärwicklung verbunden sind und dass die zweite Sekundärwicklung zur Speisung der Bordnetzversorgungsschaltung wirksam ist.

Der Vorteil der Erfindung besteht darin, dass die Ladeschaltung und die Bordnetzversorgungsschaltung in einem Gehäuse untergebracht werden können. So muss nur noch dieses eine Gehäuse in hoher Schutzart ausgeführt werden, so dass es für verschiedene Umgebungsbedingungen besonders geeignet ist und den erforderlichen Schutz von Menschen gegen potentielle Gefährdung bei Benutzung oder Bedienung aufweist. Auf diese Weise werden Kosten, Gewicht und benötigtes Bauvolumen reduziert. Außerdem ist nur noch eine Verbindung der Hochvoltbatterie zur Ladeschaltung und zur Bordnetzversorgungsschaltung erforderlich, während zuvor zwei separate Verbindungen benötigt wurden. Daher entfällt eine elektrische Leitung mit einem Stecker in hoher Schutzart. Statt zuvor zwei Übertragern, nämlich jeweils einem für das Ladegerät und für das BordnetzVersorgungsgerät, ist nun nur noch ein Übertrager mit zumindest zwei Sekundärwicklungen erforderlich. Auch weitere Bauteile können mit der erfindungsgemäßen Lade- und Bordnetzversorgungsschaltung eingespart werden, wie zum Beispiel ein zweiter Hochsetzsteller, eine zweite Vorladungsschaltung, ein zweiter Zwischenkreiskondensator und ein zweiter Wechselrichter, welche z.B. in einem separaten Bordnetzversorgungsgerät benötigt wurden. Auch ein Filter kann entfallen, das z.B. einer Ausgangsseite des Ladegeräts für den Anschluss an die Hochvoltbatterie vorgeschaltet ist.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Optional ist bei der Vorrichtung ein Schalter zur Umschaltung zwischen der Hochvoltbatterie und dem Versorgungsnetz und ein gesteuerten Gleichrichter zum Laden der Hochvoltbatterie vorgesehen. Dann kann bei einer ersten Schalterstellung die Hochvoltbatterie geladen werden. Dazu wird der gesteuerte Gleichrichter, der im Folgenden zur Unterscheidung als erster gesteuerter Gleichrichter bezeichnet wird, aktiviert, so dass eine über die Primärwicklung und die erste Sekundärwicklung des elektromagnetischen Übertrages übertragene Wechselspannung im zweiten Teil der Ladeschaltung mittels des ersten gesteuerten Gleichrichters in Gleichspannung umgewandelt und zum Laden der Hochvoltbatterie verwendbar ist. Bei einer zweiten Schalterstellung wird ein Schaltkreis geschlossen, mit dem aus der Hochvoltbatterie eine Spannung für die Bordnetzversorgungsschaltung abgreifbar ist.

Wenn ein weiterer gesteuerter Gleichrichter, der im Folgenden als zweiter gesteuerter Gleichrichter bezeichnet wird, zur Erzeugung einer Gleichspannung aus einer mit dem Übertrager übertragenen Wechselspannung zum Bereitstellen einer Bordnetzversorgungsspannung vorgesehen ist, wird bei aktiviertem zweiten gesteuerten Gleichrichter die Bordnetzversorgungsschaltung gespeist.

Wenn der Schalter in Stromflussrichtung hinter einem ungesteuerten Gleichrichter zum Umwandeln einer vom Versorgungsnetz abgreifbaren Wechselspannung in Gleichspannung angeordnet ist, kann im Bordnetzbetrieb, d.h. wenn die Bordnetzversorgungsschaltung aus der Hochvoltbatterie gespeist wird, eine Verlustleistung erheblich reduziert werden. Bei einer derartigen Anordnung des Schalters liegt nämlich der ungesteuerte Gleichrichter, welcher eine hohe Verlustleistung aufweist, außerhalb des Schaltkreises zur Speisung der Bordnetzversorgungsschaltung.

In einer Ausführungsform ist bei der Vorrichtung ein Spannungswandler vorgesehen, der entweder als gesteuerter Gleichrichter oder als Wechselrichter fungiert. In seiner Funktion als gesteuerter Gleichrichter fungiert der Spannungswandler wie der oben beschriebene erste gesteuerte Gleichrichter zum Laden der Hochvoltbatterie. Dies wird im Folgenden so ausgedrückt, dass der Spannungswandler als erster gesteuerter Gleichrichter fungiert. In seiner Funktion als Wechselrichter fungiert der Spannungswandler zum Erzeugen einer Wechselspannung aus einer von der Hochvoltbatterie erzeugten Gleichspannung. Auf diese Weise kann auf einen Schalter zur Umschaltung zwischen der Hochvoltbatterie und dem Versorgungsnetz verzichtet werden.

In einer weiteren Ausführungsform ist vorgesehen, dass der Übertrager neben der ersten und zweiten Sekundärwicklung eine dritte Sekundärwicklung umfasst und dass die Vorrichtung eine erste und eine zweite Teilschaltung zum Bereitstellen einer Bordnetzversorgungsspannung umfasst, wobei die Teilschaltungen parallel betreibbar sind und wobei über die erste Teilschaltung eine geringere elektrische Leistung als über die zweite Teilschaltung abgreifbar ist. Auf diese Weise ist ein effizienter Betrieb beim Laden der Hochvoltbatterie möglich, denn beim Laden wird aus der Bordnetzversorgungsschaltung nicht die volle elektrische Leistung, z.B. 3000 W, benötigt, sondern nur eine geringere elektrische Leistung von beispielsweise 300 W bis 600 W. Durch die erste Teilschaltung wird diese geringere elektrische Leistung während des Ladens dem Bordnetzbetrieb zur Verfügung gestellt. Die für größere elektrische Leistungen, z.B. bis zu 3000 W, ausgelegte zweite Teilschaltung bleibt währenddessen inaktiv. Im Bordnetzbetrieb, d.h. bei gespeister Bordnetzversorgungsschaltung, sind die erste und die zweite Teilschaltung parallel betreibbar. Dabei ist jede der Teilschaltungen in einem jeweils optimalen Leistungsbereich betreibbar. Vor allem bezogen auf die gesamte Lebens- und Ladedauer des Elektrofahrzeugs können somit beträchtliche Verluste der elektrischen Leistung eingespart werden.

Bezüglich des Verfahrens wird die eingangs genannte Aufgabe erfindungsgemäß gelöst durch die Merkmale des unabhängigen Verfahrensanspruchs. Zweckmäßige Weiterbildungen dieses Verfahrens sind Gegenstand der auf diesen rückbezogenen Unteransprüche.

Bei dem Verfahren zum Betrieb einer Vorrichtung zur elektrischen Versorgung eines Elektrofahrzeugs, die einen Netzanschluss und eine Hochvoltbatterie umfasst oder an eine Hochvoltbatterie anschließbar ist sowie eine Ladeschaltung und eine Bordnetzversorgungsschaltung sowie einen elektromagnetischen Übertrager mit einer Primärwicklung und einer ersten und zumindest einer zweiten Sekundärwicklung umfasst, wobei ein erster und ein zweiter Teil der Ladeschaltung durch die Primärwicklung und die erste Sekundärwicklung verbunden sind und wobei die zweite Sekundärwicklung zur Speisung der Bordnetzversorgungsschaltung wirksam ist, ist vorgesehen, dass wahlweise die Hochvoltbatterie in einem Ladebetrieb geladen wird, eine Bordnetzversorgungsspannung erzeugt wird oder während des Ladebetriebs gleichzeitig eine Bordnetzversorgungs― spannung erzeugt wird.

Bei einer Ausführungsform des Verfahrens, bei der die Vorrichtung einen Schalter zur Umschaltung zwischen der Hochvoltbatterie und dem Versorgungsnetz, einen gesteuerten Gleichrichter - erster gesteuerter Gleichrichter - zum Laden der Hochvoltbatterie und einen zweiten gesteuerten Gleichrichter zur Erzeugung einer Gleichspannung aus einer mit dem Übertrager übertragenen Wechselspannung zum Bereitstellen einer Bordnetzversorgungsspannung umfasst, ist vorgesehen, dass im Ladebetrieb der Schalter auf das Versorgungsnetz geschaltet wird, wobei der erste gesteuerte Gleichrichter zum Laden der Hochvoltbatterie aktiviert wird und wobei der zweite gesteuerte Gleichrichter deaktiviert wird.

Bei einer weiteren Ausführungsform des Verfahrens, bei der die Vorrichtung einen Schalter zur Umschaltung zwischen der Hochvoltbatterie und dem Versorgungsnetz, einen ersten gesteuerten Gleichrichter zum Laden der Hochvoltbatterie und einen zweiten gesteuerten Gleichrichter zur Erzeugung einer Gleichspannung aus einer mit dem Übertrager übertragenen Wechselspannung zum Bereitstellen einer Bordnetzversorgungs― spannung umfasst, ist vorgesehen, dass zum Erzeugen einer Bordnetzversorgungsspannung der Schalter auf die Hochvoltbatterie geschaltet wird, dass der erste gesteuerte Gleichrichter zum Laden der Hochvoltbatterie deaktiviert wird und dass der zweite gesteuerte Gleichrichter aktiviert wird.

Bei einer weiteren Ausführungsform des Verfahrens, bei der die Vorrichtung einen Schalter zur Umschaltung zwischen der Hochvoltbatterie und dem Netzanschluss, einen ersten gesteuerten Gleichrichter zum Laden der Hochvoltbatterie und einen zweiten gesteuerten Gleichrichter zur Erzeugung einer Gleichspannung aus einer mit dem Übertrager übertragenen Wechselspannung zum Bereitstellen einer Bordnetzversorgungsspannung umfasst, ist vorgesehen, dass, wenn während des Ladebetriebs gleichzeitig eine Bordnetzversorgungsspannung erzeugt wird, der Schalter auf das Versorgungsnetz geschaltet wird, dass der erste gesteuerte Gleichrichter zum Laden der Hochvoltbatterie aktiviert wird und dass der zweite gesteuerte Gleichrichter aktiviert wird, wobei eine Bordnetzversorgungsspan― nung unabhängig vom Ladebetrieb geregelt wird.

Bei einer alternativen Ausführungsform des Verfahrens, bei der die Vorrichtung einen Spannungswandler, der entweder als gesteuerter Gleichrichter oder als Wechselrichter fungiert und in seiner Funktion als gesteuerter Gleichrichter als erster gesteuerter Gleichrichter zum Laden der Hochvoltbatterie fungiert und in seiner Funktion als Wechselrichter zum Erzeugen einer Wechselspannung aus einer von der Hochvoltbatterie erzeugten Gleichspannung fungiert, und einen zweiten gesteuerten Gleichrichter zum Bereitstellen einer Bordnetzversorgungsspannung umfasst, ist vorgesehen, dass im Ladebetrieb mit dem Spannungswandler eine Gleichspannung zum Laden der Hochvoltbatterie aus der über die erste Sekundärwicklung übertragenen Wechselspannung erzeugt wird und dass der zweite gesteuerte Gleichrichter deaktiviert wird.

Bei einer weiteren Ausführungsform des Verfahrens, bei der die Vorrichtung einen Spannungswandler, der entweder als gesteuerter Gleichrichter oder als Wechselrichter fungiert und in seiner Funktion als gesteuerter Gleichrichter als erster gesteuerter Gleichrichter zum Laden der Hochvoltbatterie fungiert und in seiner Funktion als Wechselrichter zum Erzeugen einer Wechselspannung aus einer von der Hochvoltbatterie erzeugten Gleichspannung fungiert, und einen zweiten gesteuerten Gleichrichter zum Bereitstellen einer Bordnetzversorgungsspannung umfasst, ist vorgesehen, dass zum Erzeugen einer Bordnetzversorgungsspannung mit dem Spannungswandler eine Wechselspannung aus einer von der Hochvoltbatterie erzeugten Gleichspannung erzeugt wird und dass der zweite gesteuerte Gleichrichter aktiviert wird.

Bei einer weiteren Ausführungsform des Verfahrens, bei der die Vorrichtung einen Spannungswandler, der entweder als gesteuerter Gleichrichter oder als Wechselrichter fungiert und in seiner Funktion als gesteuerter Gleichrichter als erster gesteuerter Gleichrichter zum Laden der Hochvoltbatterie fungiert und in seiner Funktion als Wechselrichter zum Erzeugen einer Wechselspannung aus einer von der Hochvoltbatterie erzeugten Gleichspannung fungiert, und einen zweiten gesteuerten Gleichrichter zum Bereitstellen einer Bordnetzversorgungsspannung umfasst, ist vorgesehen, dass, wenn während des Ladebetriebs gleichzeitig eine Bordnetzversorgungsspannung erzeugt wird, mit dem Spannungswandler eine Gleichspannung zum Laden der Hochvoltbatterie aus der über die erste Sekundärwicklung übertragenen Wechselspannung erzeugt wird, und dass der zweite gesteuerte Gleichrichter aktiviert wird und eine Bordnetzversorgungsspannung unabhängig vom Ladebetrieb geregelt wird.

Bei einer weiteren Ausführungsform des Verfahrens, bei der der Übertrager der Vorrichtung neben der ersten und zweiten Sekundärwicklung eine dritte Sekundärwicklung umfasst, wobei an die dritte Sekundärwicklung eine erste Teilschaltung und an die zweite Sekundärwicklung eine zweite Teilschaltung angeschlossen ist, wobei die Teilschaltungen zum Bereitstellen einer Bordnetzversorgungsspannung ausgeführt und parallel betreibbar sind und wobei über die erste Teilschaltung eine geringere elektrische Leistung als über die zweite Teilschaltung abgreifbar ist, ist vorgesehen, dass, wenn während des Ladebetriebs gleichzeitig eine Bordnetzversorgungsspannung erzeugt wird, eine Spannung vom Versorgungsnetz über die Primärwicklung und die dritte Sekundärwicklung in die erste Teilschaltung eingespeist wird, wobei ein gesteuerter Gleichrichter der ersten Teilschaltung aktiviert wird und eine Bordnetzversorgungsspannung unabhängig vom Ladebetrieb geregelt wird.

Die Eingangs genannte Aufgabe wird auch mit einem Elektrofahrzeug gelöst, das eine Vorrichtung mit einzelnen oder mehreren der o.g. Merkmale zur elektrischen Versorgung einzelner oder mehrerer von dem Elektrofahrzeug umfasster elektrischer Aggregate umfasst.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- FIG 1: eine Vorrichtung zur elektrischen Versorgung eines Elektrofahrzeugs gemäß einem Beispiel aus dem Stand der Technik,
- FIG 2: ein Ausführungsbeispiel für eine Vorrichtung zur elektrischen Versorgung eines Elektrofahrzeugs gemäß der vorliegenden Erfindung,
- FIG 3: ein zweites Ausführungsbeispiel für eine Vorrichtung gemäß der vorliegenden Erfindung,
- FIG 4: ein drittes Ausführungsbeispiel für eine Vorrichtung gemäß der vorliegenden Erfindung und
- FIG 5: ein schematisch vereinfachtes Flussdiagramm eines Verfahrens zum Betrieb einer erfindungsgemäßen Vorrichtung zur elektrischen Versorgung eines Elektrofahrzeugs.

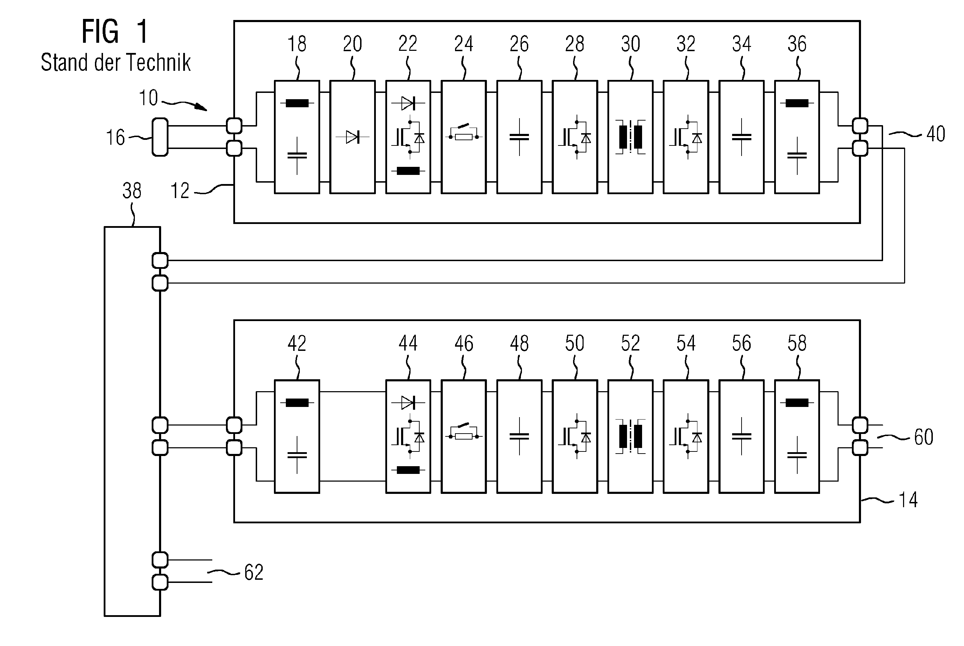

FIG 1 zeigt eine Vorrichtung 10 zur elektrischen Versorgung eines Elektrofahrzeugs wie sie im Stand der Technik üblich ist. Darin sind zwei separate Geräte, nämlich ein Ladegerät 12 und ein Bordnetzversorgungsgerät 14, mit größtenteils identischer Leistungselektronik vorgesehen. Das Ladegerät 12 ist eingangsseitig an ein Versorgungsnetz 16 angeschlossen oder anschließbar. Es umfasst eine Anzahl bekannter elektrischer Einheiten, die wie folgt in Reihe geschaltet sind: ein erstes Filter 18, ein ungesteuerter oder passiver Gleichrichter 20, ein erster Hochsetzsteller 22 mit Leistungsfaktorkorrekturfunktion, eine erste Vorladeschaltung 24, ein erster Zwischenkreiskondensator 26, ein erster Wechselrichter 28, ein erster Übertrager 30, ein erster gesteuerter Gleichrichter 32, ein zweiter Zwischenkreiskondensator 34 und ein zweites Filter 36. Mit diesen Einheiten 18-36 wird die am Versorgungsnetz 16 abgreifbare Spannung in eine Gleichspannung von z.B. 200 V bis 400 V zum Laden einer Hochvoltbatterie 38 umgewandelt. Die Hochvoltbatterie 38 ist an einer Ausgangsseite 40 des Ladegeräts 12 angeschlossen.

Das Bordnetzversorgungsgerät 14, welches eingangsseitig an die Hochvoltbatterie 38 angeschlossen ist, umfasst außer einem ungesteuerten Gleichrichter ähnliche elektrische Einheiten wie das Ladegerät 12, nämlich nacheinander geschaltet ein drittes Filter 42, einen zweiten Hochsetzsteller 44, eine zweite Vorladeschaltung 46, einen dritten Zwischenkreiskondensator 48, einen zweiten Wechselrichter 50, einen zweiten Übertrager 52, einen zweiten gesteuerten Gleichrichter 54, einen vierten Zwischenkreiskondensator 56 und ein viertes Filter 58. Damit wird die von der Hochvoltbatterie 38 abgreifbare elektrische Leistung in eine zur Versorgung eines Bordnetzes (nicht dargestellt) des Elektrofahrzeugs geeignete elektrische Leistung, z.B. mit 12 V bis 14 V und 210 A, umgewandelt. Das Bordnetz ist an einer Ausgangsseite 60 des Bordnetzversorgungsgerätes 14 angeschlossen. Das Bordnetz besteht z.B. aus Nebenaggregaten (nicht dargestellt) des Elektrofahrzeugs, wie einer Wasserpumpe für flüssigkeitsgekühlte Komponenten, beispielsweise ein Elektromotor und ein Wechselrichter, für eine Heizung, einen Kompressor für eine Klimaanlage, einen oder mehrere Scheibenwischer, für eine Lichtanlage usw. An der Hochvoltbatterie 38 ist außerdem an einem entsprechenden Ausgang 62 ein Wechselrichter (nicht dargestellt) für den Fahrzeugantriebsmotor (nicht dargestellt) angeschlossen.

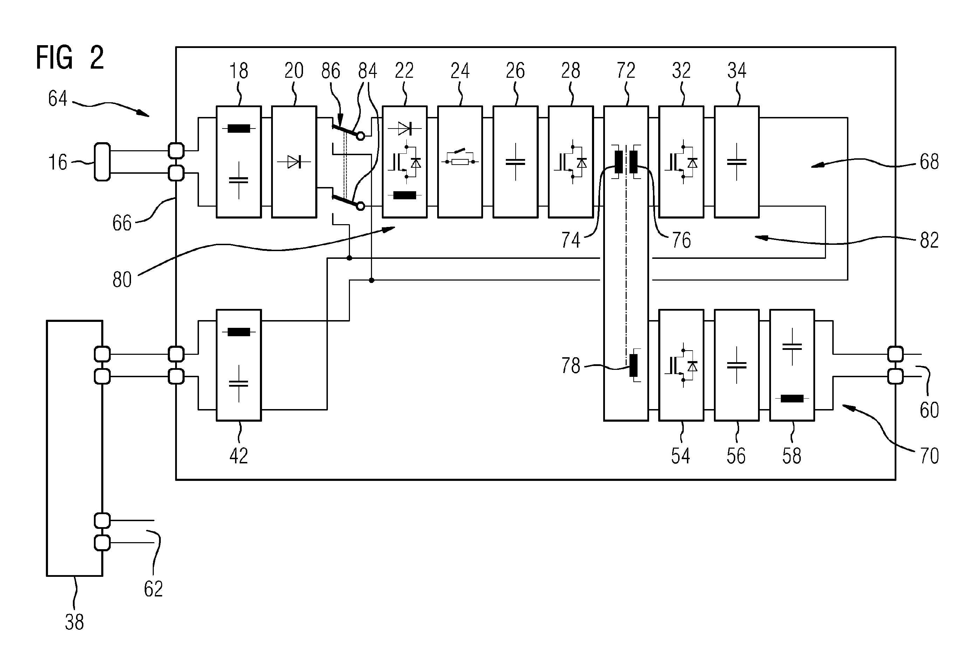

FIG 2 zeigt ein Ausführungsbeispiel für eine Vorrichtung 64 zur elektrischen Versorgung eines Elektro- oder Elektrohybridfahrzeugs gemäß der vorliegenden Erfindung. Hierbei wird anstelle des Ladegeräts 12 (FIG 1) und des Bordnetzversorgungsgeräts 14 (FIG 1) ein kombiniertes Lade- und Bordnetzversorgungsgerät 66 in einem einzigen Gehäuse an das Versorgungsnetz 16 und die Hochvoltbatterie 38 angeschlossen. Die Vorrichtung 64 umfasst somit neben einem Anschluss an die Hochvoltbatterie 38 und einem Anschluss an das Versorgungsnetz 16 eine Ladeschaltung 68 und eine Bordnetzversorgungsschaltung 70. Statt einem ersten und zweiten Übertrager 30, 52 umfasst die Vorrichtung 64 einen elektromagnetischen Übertrager 72 mit einer Primärwicklung 74 und einer ersten und zumindest einer zweiten Sekundärwicklung 76, 78. Ein erster und zweiter Teil 80, 82 der Ladeschaltung 68 sind durch die Primärwicklung 74 und die erste Sekundärwicklung 76 verbunden. Die zweite Sekundärwicklung 78 ist zur Speisung der Bordnetzversorgungsschaltung 70 wirksam.

Die Vorrichtung 64 umfasst weiterhin einen Schalter 84 zur Umschaltung zwischen der Hochvoltbatterie 38 und dem Versorgungsnetz 16. Der Schalter 84 ist hier dem ungesteuerten Gleichrichter 20 im ersten Teil 80 der Ladeschaltung 68 nachgeschaltet. Bei Aktivierung des ersten gesteuerten Gleichrichters 32, welcher an die erste Sekundärwicklung 76 des Übertragers 72 angeschlossen ist, wird bei einer ersten Schalterstellung 86, wie hier dargestellt, die Hochvoltbatterie 38 geladen.

Bei einer zweiten Schalterstellung (nicht dargestellt) wird eine Gleichspannung von der Hochvoltbatterie 38 in den ersten Teil 80 der Ladeschaltung 68 gespeist. Darin wird die Gleichspannung mittels des ersten Wechselrichters 28 in Wechselspannung umgewandelt und an den Übertrager 72 übertragen. An der zweiten Sekundärwicklung 78 des Übertragers 72 ist der zweite gesteuerte Gleichrichter 54 zur Erzeugung einer Gleichspannung aus der mit dem Übertrager 72 übertragenen Wechselspannung zum Bereitstellen einer Bordnetzversorgungsspannung angeschlossen. Die elektrische Leistung von der Hochvoltbatterie 38 wird somit bei der zweiten Schalterstellung in die Bordnetzversorgungsschaltung 70 eingespeist.

Durch die Ladeschaltung 68 und die Bordnetzversorgungsschaltung 70 werden eine Vielzahl von Einheiten oder Elementen, die bei der Vorrichtung 10 (FIG 1) aus dem Stand der Technik verwendet werden, nicht mehr benötigt, wie z.B. das zweite Filter 36, der zweite Hochsetzsteller 44, die zweite Vorladeschaltung 46, der dritte Zwischenkreiskondensator 48, der zweite Wechselrichter 50 und der zweite Übertrager 52 (alle FIG 1).

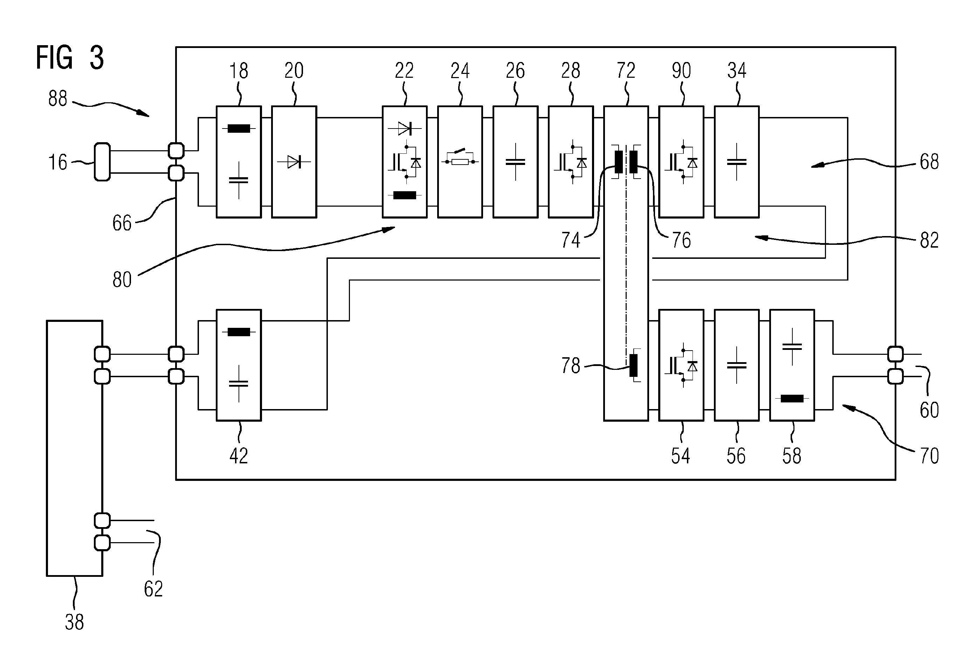

FIG 3 zeigt ein zweites Ausführungsbeispiel für eine Vorrichtung 88 gemäß der vorliegenden Erfindung. Im Gegensatz zu der oben mit Bezug auf FIG 2 beschriebenen Vorrichtung 64 umfasst die in FIG 3 gezeigte Vorrichtung keinen Schalter 84 (FIG 2), sondern einen Spannungswandler 90, der an der Stelle des ersten gesteuerten Gleichrichters 32 (FIG 2) der ersten Sekundärwicklung 76 in der Ladeschaltung 68 nachgeschaltet ist.

Der Spannungswandler 90 fungiert entweder als gesteuerter Gleichrichter oder als Wechselrichter. In seiner Funktion als gesteuerter Gleichrichter fungiert der Spannungswandler 90 wie der erste gesteuerte Gleichrichter 32 zum Laden der Hochvoltbatterie 38, wie oben bereits beschrieben. Dazu muss der als erster gesteuerter Gleichrichter fungierende Spannungswandler 90 aktiviert sein, z.B. über eine dafür vorgesehene Steuerungseinrichtung (nicht dargestellt). In seiner Funktion als Wechselrichter fungiert der Spannungswandler 90 zum Erzeugen einer Wechselspannung aus einer von der Hochvoltbatterie 38 erzeugten Gleichspannung. Die Gleichspannung wird dabei von der Hochvoltbatterie 38 in den zweiten Teil 82 der Ladeschaltung 68 gespeist und im als Wechselrichter fungierenden Spannungswandler 90 in Wechselspannung umgewandelt.

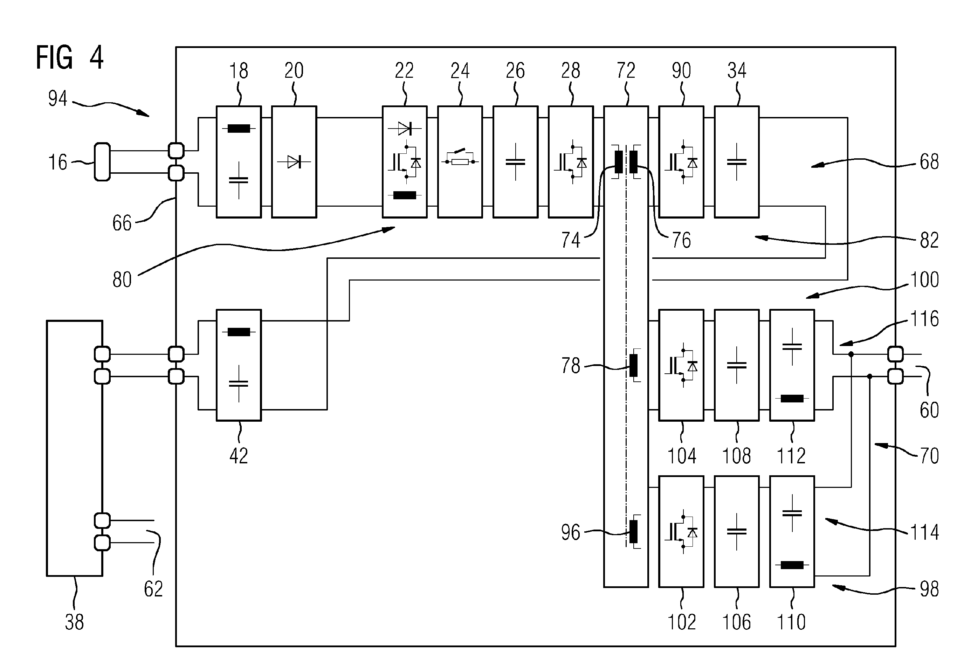

Die Wechselspannung wird dann mit dem Übertrager 72 über die erste Sekundärwicklung 76 und die zweite Sekundärwicklung 78 an den zweiten gesteuerten Gleichrichter 54, welcher aktiviert sein muss, übertragen. Der zweite gesteuerte Gleichrichter 54 wandelt die übertragene Wechselspannung in eine Gleichspannung um. An der Ausgangsseite 60 der Bordnetzversorgungsschaltung 70 ist dann eine elektrische Leistung abgreifbar, die vom Bordnetz (nicht dargestellt) genutzt werden kann, z.B. 2.520 W bis 2.940 W, wobei die Spannung 12 V bis 14 V und die Stromstärke 210 A beträgt. Prinzipiell kann die Vorrichtung 64 (FIG 2), 88 (FIG 3), 94 (FIG 4) für verschiedene Ebenen der Bordspannung genutzt werden, also z.B. - wie hier beschrieben - 12 Volt oder auch 24 Volt, z.B. für Nutzfahrzeuge, oder jede andere Bordspannung.

Wenn der Spannungswandler 90 als erster gesteuerter Gleichrichter 32 fungiert und die Hochvoltbatterie 38 somit geladen wird, kann unabhängig von dem Ladebetrieb eine Bordnetzversorgungsspannung an der Ausgangsseite 60 der Bordnetzversorgungsschaltung 70 abgegriffen werden. Die dafür benötigte Spannung wird wie die Ladespannung vom Versorgungsnetz 16 zu Verfügung gestellt, jedoch vom ersten Teil 80 der Ladeschaltung 68 über die Primärwicklung 74 und die zweite Sekundärwicklung 78 des Übertragers 72 an die Bordnetzversorgungsschaltung 70 übertragen, wobei der zweite gesteuerte Gleichrichter 54, z.B. über die Steuerungseinrichtung, aktiviert ist.

In FIG 4 ist ein drittes Ausführungsbeispiel für eine Vorrichtung 94 gemäß der vorliegenden Erfindung dargestellt. Der Unterschied zu der in FIG 3 gezeigten Vorrichtung 88 liegt darin, dass der Übertrager 72 neben der ersten und zweiten Sekundärwicklung 76, 78 eine dritte Sekundärwicklung 96 umfasst. Außerdem umfasst die Bordnetzversorgungsschaltung 70 eine erste und eine zweite Teilschaltung 98, 100 zum Bereitstellen der Bordnetzversorgungsspannung. Die Teilschaltungen 98, 100 sind parallel betreibbar. Die erste Teilschaltung 98 ist der dritten Sekundärwicklung 96 nachgeschaltet und die zweite Teilschaltung 100 ist der zweiten Sekundärwicklung 78 nachgeschaltet. Jede der Teilschaltungen 98, 100 umfasst einen gesteuerten Gleichrichter 102, 104, einen Zwischenkreiskondensator 106, 108 und ein Filter 110, 112. Über die erste Teilschaltung 98 ist eine geringere elektrische Leistung als über die zweite Teilschaltung 100 abgreifbar, z.B. 480 W bis 560 W, wobei die Spannung 12 V bis 14 V und die Stromstärke 40 A beträgt. Über die zweite Teilschaltung 100 ist dann beispielsweise eine elektrische Leistung von 2.160 W bis 2.520 W abgreifbar, wobei die Spannung 12 V bis 14 V und die Stromstärke 180 A beträgt. Beim Laden der Hochvoltbatterie 38 wird im Allgemeinen nicht die höchstmögliche elektrische Leistung, z.B. 3.000 W, benötigt, sondern es reicht eine geringer elektrische Leistung von beispielsweise 300 W bis 600 W. Diese geringere elektrische Leistung fällt in den Bereich der elektrischen Leistung, die mit der ersten Teilschaltung 98 zur Verfügung gestellt wird. Soll während des Ladebetriebs der Hochvoltbatterie 38 eine Bordnetzspannung abgegriffen werden, wird die Spannung bei aktiviertem gesteuerten Gleichrichter 102 der ersten Teilschaltung 98 vom Versorgungsnetz 16 über den ersten Teil 80 der Ladeschaltung 68, die Primärwicklung 74 und die dritte Sekundärwicklung 96 des Übertragers 72 in die erste Teilschaltung 98 eingespeist und ist an deren Ausgangsseite 114 abgreifbar. Außerhalb des Ladebetriebs wird die Spannung von der Hochvoltbatterie 38 bei aktiviertem gesteuerten Gleichrichter 104 der zweiten Teilschaltung 100 über den wie oben beschrieben als Wechselrichter fungierenden Spannungswandler 90, die erste Sekundärwicklung 76 und die zweite Sekundärwicklung 78 in die zweite Teilschaltung 100 eingespeist und ist an deren Ausgangsseite 116 als Bordnetzversorgungsspannung abgreifbar.

Bei allen Ausführungsformen kann der ungesteuerte Gleichrichter 20 durch aktive Schalter ersetzt werden, so dass sich eine Möglichkeit zur Rückspeisung in das Versorgungsnetz 16 ergibt.

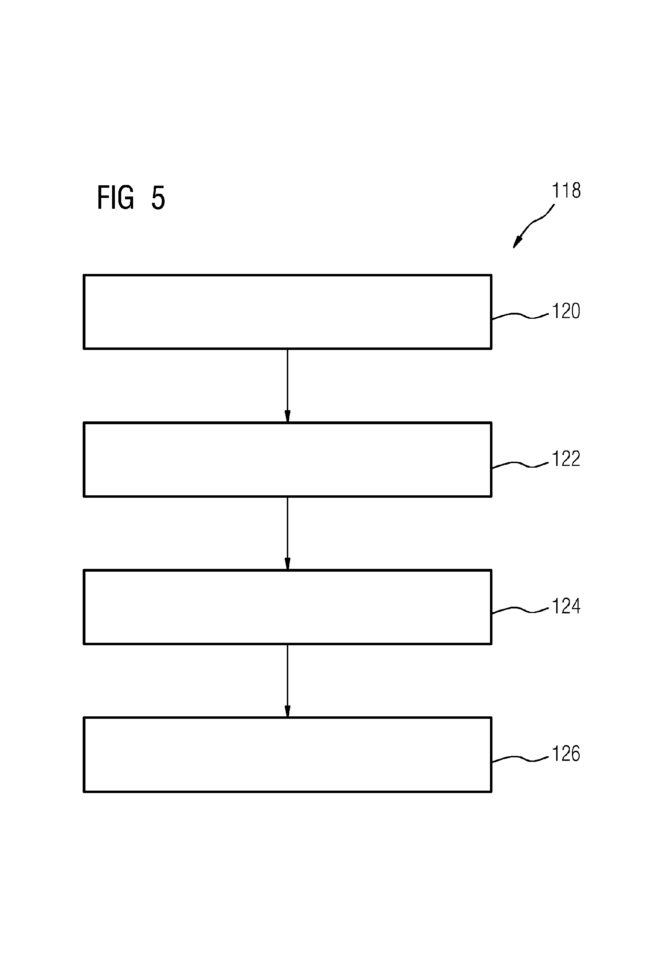

In FIG 5 ist ein schematisch vereinfachtes Flussdiagram als Ausführungsbeispiel eines Verfahrens 118 zum Betrieb einer Vorrichtung gemäß der Erfindung gezeigt. Dabei wird in einem ersten Schritt 120 ein Ladebetrieb aktiviert, z.B. durch Anschließen des kombinierten Lade- und Bordnetzversorgungsgeräts 66 (FIG 2) an das Versorgungsnetz 16 (FIG 2). In einem zweiten Schritt 122 wird der Schalter 84 (FIG 2) auf das Versorgungsnetz 16 geschaltet, d.h. der Schalter 84 wird in die erste Schalterstellung 86 (FIG 2) gebracht. Dies kann z.B. durch entsprechende Ansteuerung mit einer Steuerungseinrichtung erfolgen. In einem dritten Schritt 124 wird der erste gesteuerte Gleichrichter 32 (FIG 2) zum Laden der Hochvoltbatterie aktiviert, z.B. ebenfalls mit der Steuerungseinrichtung. In einem vierten Schritt 126 wird der zweite gesteuerte Gleichrichter 54 (FIG 2) deaktiviert, so dass keine Spannung in die Bordnetzversorgungsschaltung 70 eingespeist wird. Die am Versorgungsnetz 16 abgreifbare Spannung dient dann ausschließlich der Ladung der Hochvoltbatterie. Selbstverständlich können die einzelnen Schritte 120-126 in grundsätzlich beliebiger Reihenfolge ausgeführt werden.

Einzelne im Vordergrund stehende Aspekte der hier eingereichten Beschreibung lassen sich damit kurz wie folgt zusammenfassen: Es wird eine Vorrichtung zur elektrischen Versorgung eines Elektrofahrzeugs, zum Anschluss an eine Hochvoltbatterie (38) und ein Versorgungsnetz (16), wobei die Vorrichtung eine Ladeschaltung (68) und eine Bordnetzversorgungsschaltung (70) sowie einen elektromagnetischen Übertrager (72) mit einer Primärwicklung (74) und einer ersten und zumindest einer zweiten Sekundärwicklung (76, 78) umfasst, wobei ein erster und ein zweiter Teil 80, 82 der Ladeschaltung 68 durch die Primärwicklung 74 und die erste Sekundärwicklung 76 verbunden sind und wobei die zweite Sekundärwicklung 78 zur Speisung der Bordnetzversorgungsschaltung 70 wirksam ist.

## Patentansprüche

1. Vorrichtung zur elektrischen Versorgung eines Elektrofahrzeugs, zum Anschluss an eine Hochvoltbatterie (38) und ein Versorgungsnetz (16), wobei die Vorrichtung eine Ladeschaltung (68) und eine Bordnetzversorgungsschaltung (70) sowie einen elektromagnetischen Übertrager (72) mit einer Primärwicklung (74) und einer ersten und zumindest einer zweiten Sekundärwicklung (76,78) umfasst,
wobei ein erster und ein zweiter Teil (80,82) der Ladeschaltung (68) durch die Primärwicklung (74) und die erste Sekundärwicklung (76) verbunden sind und
wobei die zweite Sekundärwicklung (78) zur Speisung der Bordnetzversorgungsschaltung (70) wirksam ist.

2. Vorrichtung nach Anspruch 1, mit einem Schalter (84) zur Umschaltung zwischen der Hochvoltbatterie (38) und dem Versorgungsnetz (16), und mit einem gesteuerten Gleichrichter - erster gesteuerter Gleichrichter (32) - zum Laden der Hochvoltbatterie (38).

3. Vorrichtung nach Anspruch 1 oder 2, mit einem zweiten gesteuerten Gleichrichter (54) zur Erzeugung einer Gleichspannung aus einer mit dem Übertrager (72) übertragenen Wechselspannung zum Bereitstellen einer Bordnetzversorgungsspannung.

4. Vorrichtung nach Anspruch 2 oder 3, wobei der Schalter (84) hinter einem ungesteuerten Gleichrichter (20) zum Umwandeln einer vom Versorgungsnetz (16) abgreifbaren Wechselspannung in Gleichspannung angeordnet ist.

5. Vorrichtung nach Anspruch 1 oder 3, mit einem Spannungswandler (90), der entweder als gesteuerter Gleichrichter oder als Wechselrichter fungiert und in seiner Funktion als gesteuerter Gleichrichter als erster gesteuerter Gleichrichter (32) zum Laden der Hochvoltbatterie (38) fungiert und in seiner Funktion als Wechselrichter zum Erzeugen einer Wechselspannung aus einer von der Hochvoltbatterie (38) erzeugten Gleichspannung fungiert.

6. Vorrichtung nach einem der Ansprüche 1 bis 5, wobei der Übertrager (72) neben der ersten und zweiten Sekundärwicklung (76,78) eine dritte Sekundärwicklung (96) umfasst, wobei an die dritte Sekundärwicklung (96) eine erste Teilschaltung (98) und an die zweite Sekundärwicklung (78) eine zweite Teilschaltung (100) angeschlossen ist, wobei die Teilschaltungen (98, 100) zum Bereitstellen einer Bordnetzversorgungsspannung ausgeführt und parallel betreibbar sind und wobei über die erste Teilschaltung (98) eine geringere elektrische Leistung als über die zweite Teilschaltung (100) abgreifbar ist.

7. Verfahren zum Betrieb einer Vorrichtung zur elektrischen Versorgung eines Elektrofahrzeugs, wobei die Vorrichtung zum Anschluss an eine Hochvoltbatterie (38) und ein Versorgungsnetz (16) vorgesehen ist, wobei die Vorrichtung eine Ladeschaltung (68) und eine Bordnetzversorgungsschaltung (70) sowie einen elektromagnetischen Übertrager (72) mit einer Primärwicklung (74) und einer ersten und zumindest einer zweiten Sekundärwicklung (76,78) umfasst, wobei ein erster und ein zweiter Teil der Ladeschaltung (80, 82) durch die Primärwicklung (74) und die erste Sekundärwicklung (76) verbunden sind und wobei die zweite Sekundärwicklung (78) zur Speisung der Bordnetzversorgungsschaltung (70) wirksam ist, wobei wahlweise die Hochvoltbatterie (38) in einem Ladebetrieb geladen wird, eine Bordnetzversorgungsspannung erzeugt wird oder während des Ladebetriebs gleichzeitig eine Bordnetzversorgungsspannung erzeugt wird.

8. Verfahren nach Anspruch 7, wobei die Vorrichtung einen Schalter (84) zur Umschaltung zwischen der Hochvoltbatterie (38) und dem Versorgungsnetz (16), einen gesteuerten Gleichrichter - erster gesteuerter Gleichrichter (32) - zum Laden der Hochvoltbatterie (38) und einen zweiten gesteuerten Gleichrichter (54) zur Erzeugung einer Gleichspannung aus einer mit dem Übertrager (72) übertragenen Wechselspannung zum Bereitstellen einer Bordnetzversorgungsspannung umfasst, wobei im Ladebetrieb der Schalter (84) auf das Versorgungsnetz (16) geschaltet wird, wobei der erste gesteuerte Gleichrichter (32) zum Laden der Hochvoltbatterie (38) aktiviert wird und wobei der zweite gesteuerte Gleichrichter (54) deaktiviert wird.

9. Verfahren nach Anspruch 7 oder 8, wobei die Vorrichtung einen Schalter (84) zur Umschaltung zwischen der Hochvoltbatterie (38) und dem Versorgungsnetz (16), einen gesteuerten Gleichrichter - erster gesteuerter Gleichrichter (32) - zum Laden der Hochvoltbatterie (38) und einen zweiten gesteuerten Gleichrichter (54) zur Erzeugung einer Gleichspannung aus einer mit dem Übertrager (72) übertragenen Wechselspannung zum Bereitstellen einer Bordnetzversorgungsspannung umfasst, wobei zum Erzeugen einer Bordnetzversorgungsspannung der Schalter (84) auf die Hochvoltbatterie (38) geschaltet wird, wobei der erste gesteuerte Gleichrichter (32) zum Laden der Hochvoltbatterie (38) deaktiviert wird und wobei der zweite gesteuerte Gleichrichter (54) aktiviert wird.

10. Verfahren nach einem der Ansprüche 7 bis 9, wobei die Vorrichtung einen Schalter (84) zur Umschaltung zwischen der Hochvoltbatterie (38) und dem Versorgungsnetz (16), einen gesteuerten Gleichrichter - erster gesteuerter Gleichrichter (32) - zum Laden der Hochvoltbatterie (38) und einen zweiten gesteuerten Gleichrichter (54) zur Erzeugung einer Gleichspannung aus einer mit dem Übertrager (72) übertragenen Wechselspannung zum Bereitstellen einer Bordnetzversorgungsspannung umfasst, wobei, wenn während des Ladebetriebs gleichzeitig eine Bordnetzversorgungsspannung erzeugt wird, der Schalter (84) auf das Versorgungsnetz (16) geschaltet wird, wobei der erste gesteuerte Gleichrichter (32) zum Laden der Hochvoltbatterie (38) aktiviert wird, wobei der zweite gesteuerte Gleichrichter (54) aktiviert wird und eine Bordnetzversorgungsspannung unabhängig vom Ladebetrieb geregelt wird.

11. Verfahren nach Anspruch 7, wobei die Vorrichtung einen Spannungswandler (90), der entweder als gesteuerter Gleichrichter oder als Wechselrichter fungiert und in seiner Funktion als gesteuerter Gleichrichter als erster gesteuerter Gleichrichter (32) zum Laden der Hochvoltbatterie (38) fungiert und in seiner Funktion als Wechselrichter zum Erzeugen einer Wechselspannung aus einer von der Hochvoltbatterie (38) erzeugten Gleichspannung fungiert, und einen zweiten gesteuerten Gleichrichter (54) zum Bereitstellen einer Bordnetzversorgungsspannung umfasst, wobei im Ladebetrieb mit dem Spannungswandler (90) eine Gleichspannung zum Laden der Hochvoltbatterie (38) aus der über die erste Sekundärwicklung (76) übertragenen Wechselspannung erzeugt wird und wobei der zweite gesteuerte Gleichrichter (54) deaktiviert wird.

12. Verfahren nach Anspruch 7 oder 11, wobei die Vorrichtung einen Spannungswandler (90), der entweder als gesteuerter Gleichrichter oder als Wechselrichter fungiert und in seiner Funktion als gesteuerter Gleichrichter als erster gesteuerter Gleichrichter (32) zum Laden der Hochvoltbatterie (38) fungiert und in seiner Funktion als Wechselrichter zum Erzeugen einer Wechselspannung aus einer von der Hochvoltbatterie (38) erzeugten Gleichspannung fungiert, und einen zweiten gesteuerten Gleichrichter (54) zum Bereitstellen einer Bordnetzversorgungsspannung umfasst, wobei zum Erzeugen einer Bordnetzversorgungsspannung mit dem Spannungswandler (90) eine Wechselspannung aus einer von der Hochvoltbatterie (38) erzeugten Gleichspannung erzeugt wird, und wobei der zweite gesteuerte Gleichrichter (54) aktiviert wird.

13. Verfahren nach Anspruch 7, 11 oder 12, wobei die Vorrichtung einen Spannungswandler (90), der entweder als gesteuerter Gleichrichter oder als Wechselrichter fungiert und in seiner Funktion als gesteuerter Gleichrichter als erster gesteuerter Gleichrichter (32) zum Laden der Hochvoltbatterie (38) fungiert und in seiner Funktion als Wechselrichter zum Erzeugen einer Wechselspannung aus einer von der Hochvoltbatterie (38) erzeugten Gleichspannung fungiert, und einen zweiten gesteuerten Gleichrichter (54) zum Bereitstellen einer Bordnetzversorgungsspannung umfasst, wobei, wenn während des Ladebetriebs gleichzeitig eine Bordnetzversorgungsspannung erzeugt wird, mit dem Spannungswandler (90) eine Gleichspannung zum Laden der Hochvoltbatterie (38) aus der über die erste Sekundärwicklung (76) übertragenen Wechselspannung erzeugt wird, und wobei der zweite gesteuerte Gleichrichter (54) aktiviert wird und eine Bordnetzversorgungsspannung unabhängig vom Ladebetrieb geregelt wird.

14. Verfahren nach einem der Ansprüche 7 bis 13, wobei der Übertrager (72) der Vorrichtung neben der ersten und zweiten Sekundärwicklung (76, 78) eine dritte Sekundärwicklung (96) umfasst, wobei an die dritte Sekundärwicklung (96) eine erste Teilschaltung (98) und an die zweite Sekundärwicklung (78) eine zweite Teilschaltung (100) angeschlossen ist, wobei die Teilschaltungen (98,100) zum Bereitstellen einer Bordnetzversorgungsspannung ausgeführt und parallel betreibbar sind und wobei über die erste Teilschaltung (98) eine geringere elektrische Leistung als über die zweite Teilschaltung (100) abgreifbar ist, wobei, wenn während des Ladebetriebs gleichzeitig eine Bordnetzversorgungsspannung erzeugt wird, eine Spannung vom Versorgungsnetz (16) über die Primärwicklung (74) und die dritte Sekundärwicklung (96) in die erste Teilschaltung (98) eingespeist wird, wobei ein gesteuerter Gleichrichter (102) der ersten Teilschaltung (98) aktiviert wird und eine Bordnetzversorgungsspannung unabhängig vom Ladebetrieb geregelt wird.

15. Elektrofahrzeug mit einer Vorrichtung nach einem der Ansprüche 1 bis 6.
